# EUROPEAN PATENT SPECIFICATION

(11) **EP 0 885 367 B1**
(45) Date of publication and mention of the grant of the patent: **11.07.2001**
(21) Application number: 97916480.3
(22) Date of filing: 11.04.1997
(51) Int. Cl.: F23J 15/00, F24H 3/00

(54) **METHOD AND APPARATUS FOR GENERATING HOT GAS**
VERFAHREN UND VORRICHTUNG ZUR ERZEUGUNG VON HEISSGAS
PROCEDE ET APPAREIL PERMETTANT DE PRODUIRE DU GAZ CHAUD

(30) Priority: 09.05.1996 FI 961957
(43) Date of publication of application: 23.12.1998
(73) Proprietor: Väänänen, Raimo, 33240 Tampere (FI)
(72) Inventor: Väänänen, Raimo, 33240 Tampere (FI)
(74) Representative: Kangasmäki, Reijo Holger
(86) International application number: FI9700222
(87) International publication number: WO9743581

(56) References cited:
- DE-A- 2 936 684
- DE-A- 3 302 611
- FI-B- 72 592
- US-A- 3 872 855

## Description

The invention relates to a method for generating hot gas, whereby hot gas is being generated by means of a heating space, that is at least partially in connection with a liquid space, whereby at least to adjust the final temperature of the generated hot gas cooling medium is being mixed into the hot gas after the heating space, when viewed in the flow direction of the hot gas, such as in connection with an exhaust flow arrangement, that is connected to the heating space.

The type of method and apparatus applying the same is known previously in principle from e.g. Finnish patent No. 72592. In the solution in question hot gas is being developed in a heating space, into which water is added, that is vaporized and mixed to the hot gas in a vortex chamber being placed after the heating space, by means of which the hot gas is made to rotate. Water is being fed to the vortex chamber essentially at the center of the chamber so, that water mixes mechanically to the hot gases during movement of the same to the periphery of the chamber by influence of the rotational movement of the gases and gets vaporized by effect of the heat energy of the gases. The mixture formed of the hot gases and the vaporized water is being removed from the vortex chamber essentially from the center axis of the same at the opposite side in respect of the feeding point of water.

In the solution in question a furnace has been applied, that is surrounded by a water reservoir. In the solution in question the wall of the fire tube is arranged in two parts, in which case between the flame and the water reservoir an air space has been accomplished the size of which is about 10 mm. The aim of the above arrangement is to accomplish a high temperature in the furnace as well as to prevent water of the water reservoir from getting radiation heat being transferred directly from the visible flame in a way, that water is not allowed to get vaporized. Because of this the solution in question includes furthermore a temperature limiter for the water, which is being adjusted to a suitable temperature, e.g. to about 93°, whereby exceeding the above the limiter interrupts the burner.

The type of principle represented above is not very useful in practice, because heat transmission from the visible flame to the partition wall separating the water reservoir and the flame causes the temperature of the entire partition wall to rise in a way, that the partition wall in question spreads the heat being absorbed from the flame evenly by radiation to the other wall of the fire tube being placed against water at the other side of the same. This is why in a solution of this type there always occurs vaporization in practice, which sooner or later restricts use of the apparatus, when the temperature of the water reservoir has risen too high. Furthermore a problem involved with the type of solution is just the partition wall mentioned above, which has to be made of fireproof and expensive material, so that it may stand high temperatures being directed to the same. In addition to that the vortex being used in this type of solution is disproportionately complicated and expensive, that is why it is not worth while exploiting the same in practical solutions, because a corresponding mixing can be carried out effectively enough by. spraying water, that may be carried out e.g. directly in the combustion gas duct.

It is the aim of the method according to this invention to achieve a decisive improvement in the techniques relating generation of hot gas particularly when compared to drawbacks presented above and thus to raise substantially the level of knowledge in the field. This aim is achieved by the featrues of claim 1. The final temperature of the generated hot gas is adjusted, after the vaporisation from the liquid space, has started by leading the vaporised medium to the exhaust gases and then restricting the amount of the medium to be added in liquid form, by means of the data processing unit.

The most important advantages of the method according to the invention are simplicity and reliability of the same and the constructions applicable for the same. Due to the method according to the invention heat energy given by e.g. a fire tube during hot gas firing may be produced all the time just in the desired temperature to the heating process. When a so called two-phase start-up has been adapted as an advantageous embodiment of the method according to the invention, the temperature of the hot gas may be very rapidly accomplished to the desired temperature, whereby e.g. slowness of generation of water vapour as such does not slow down the start-up. Due to the invention the fire tube in the hot gas firing may be cooled under all circumstances well enough by arranging the same as an advantageous embodiment totally surrounded by water. Due to the method it is thus possible to produce the fire tube in connection with hot gas firing e.g. from steel without massive ceramic linings, that absorb very much heat energy in high temperatures and require a long-standing aftercooling during stopping of the system. One crucial advantage of the method is furthermore, that the hot gas generator based on the same is very versatile as to the fuel choices of the same, in which connection light or heavy fuel oil, turnip rape oil, natural gas, liquid gas, bio gas etc. may be used as fuel.

Advantageous embodiments of the method according to the invention are presented in the dependent claims directed to the method.

The invention also relates to an apparatus according to claim 4.

By means of the invention it is possible to carry out generation of hot gas simply and reliably in most heterogenous ways. The apparatus according to the invention is very profitable both structurally and from the point of view of heat economy, because due to structures being advantageously insulated by water very conventional manufacturing materials may be used and there is no need for e.g. ceramic lining or corresponding arrangements. In addition to that in an apparatus being advantageously based on combustion all heat energy from the fire tube may be recovered in a way, that the generated heat transmits as efficiently as possible to the water space surrounding the same, whereby water getting vaporized in the same transmits furthermore to cool efficiently the final temperature of the developed combustion gas. The apparatus according to the invention may be constructed in many ways, in which case in addition to e.g. the fire tube it is also possible to place the actual combustion gas duct either to a totally separate water space or to the same water space with the fire tube. By using suitable choking arrangements in the connecting point of the combustion gas and water vapour the process may be stabilized very effectively in every respect. In the apparatus according to the invention it is in principle possible to carry out adjustment of the final temperature of the combustion gas by applying conventional controlling techniques by restricting the amount of water being sprayed e.g. in the spraying chamber succeeding the fire tube.

Advantageous embodiments of the apparatus according to the invention are represented in the dependent claims related to the same.

In the following description, the invention is illustrated in detail with reference to the appended drawings. In the drawings,
- fig. 1: shows a view of principle of an advantageous apparatus applying the method according to the invention,
- fig. 2: shows an advantageous alternative solution for the part of certain technical details, compared with the solution presented in fig. 1, and
- fig. 3: show furthermore an alternative embodiment compared with the above.

The invention relates to a method for generating hot gas, whereby hot gas 3 is being generated by means of a heating space 2, that is at least partially in connection with a liquid space 1, whereby at least to adjust the final temperature T of the generated hot gas cooling medium 4 is being mixed into the hot gas 3 after the heating space 2, when viewed in the flow direction s of the hot gas, such as in connection with an exhaust flow arrangement 5, that is connected to the heating space 2. The final temperature T of the generated hot gas 3 is being adjusted at least partially by mixing into the same at least by means of first mixing means 6a vaporized medium 4a, such as water vapour or like, that has been vaporized from the liquid space 1, that is at least partially in connection with the hot gas 3, such as surrounding the heating space 2 and/or the exhaust flow arrangement 5.

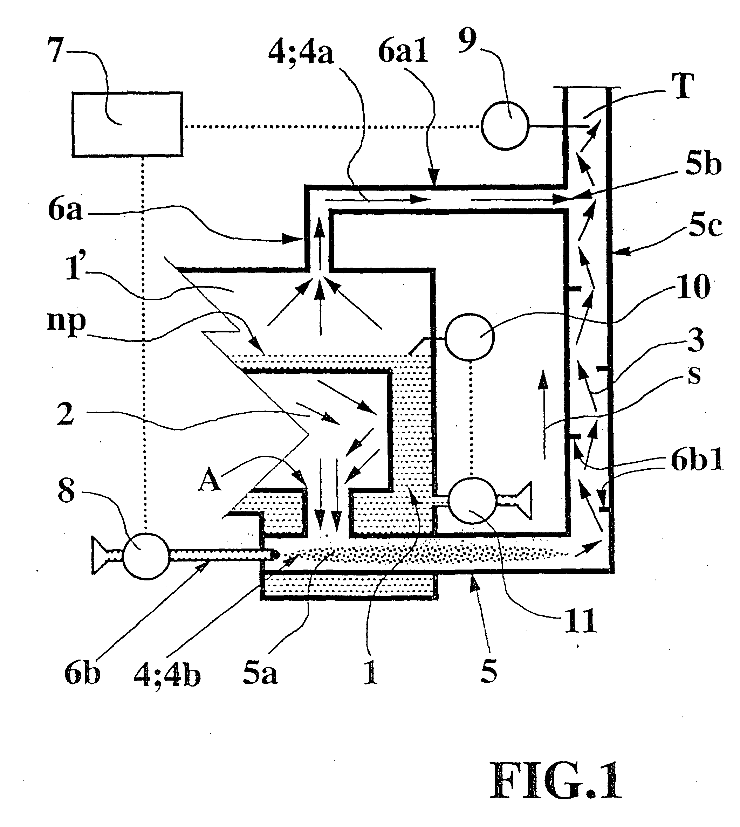

The method is being adapted particularly advantageously in a way, that a medium 4b at least in liquid form, such as water or like, is being mixed into the hot gas 3, such as e.g. combustion gas being generated by means of a heating space 2, such as a furnace or like exploiting particularly combustion, by means of secondary mixing means 6b preferably after the heating space 2, when viewed in the flow direction s of the hot gas, such as in a mixing space 5a, that is connected to the exhaust flow arrangement 5, to adjust the final temperature T of the generated hot gas 3 preferably by means of a data processing unit 7, such as by a microprocessor or like, by adjusting the amount of the medium 4b to be fed in liquid form by means of adjusting means 8, such as by a valve arrangement or like, and measuring means 9 observing the state of the hot gas 3, such as by temperature detectors or like; according to the principle presented e.g. in fig. 1.

As a particularly advantageous embodiment of the method the final temperature T of the generated hot gas 3 is being adjusted since the vaporization from the liquid space 1 has started by leading vaporized medium 4a to the exhaust flow arrangement 5 by means of first mixing means 6a at a mixing point 5b placed preferably above the liquid surface np of the liquid space 1, and advantageously by restricting the amount of the medium 4b to be fed in liquid form by the second mixing means 6b preferably by means of the data processing unit 7, the adjusting means 8 and the measuring means 9. Dimensioning of the heat transmitting surfaces of the so called fire tube 2, being applied as the furnace in this connection, is carried out advantageously in a way, that water spraying to the mixing space 5a being carried out by the second mixing means 6b occurs continuously within the entire desired temperature range of the generated hot gas, which alters typically within range ∼ 300° → 700°.

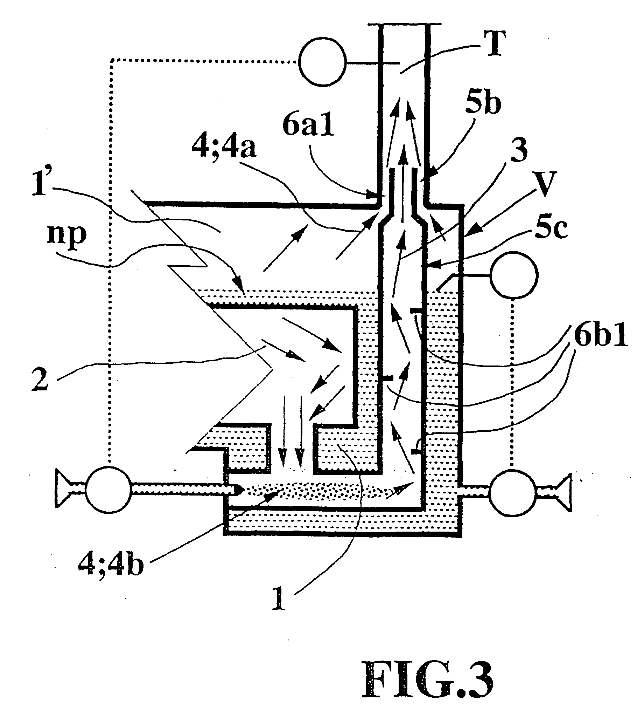

Furthermore as a particularly advantageous embodiment of the method, mixing of the vaporized medium 4a to the hot gas 3 passing through a flow space 5c, such as through one or several pipes, ducts or like of the exhaust flow arrangement 5, is being made more efficient by choking the flow space 6a1 leading the same and/or the flow space 5c leading hot gas 3, according to the principle represented e.g. in fig. 3 in connection with the mixing point 5b connecting the same.

Furthermore as an advantageous embodiment of the method, mixing of the vaporized medium 4a to the hot gas 3 passing through a flow space 5c of the exhaust flow arrangement 5, is being made more efficient by means of turbulence means 6b1, that are placed at least before the mixing point 5b in the flow space 5c leading hot gas 3. In this connection most heterogeneous internal solutions of the flow duct may be applied e.g. spiral structures or like, by means of which passage of the combustion gas flow is being disturbed.

The apparatus adapting the method according to the invention includes a heating space 2, that is at least partially in connection with a liquid space 1, whereby to adjust the final temperature T of the generated hot gas generated therewith cooling medium 4 is arranged to be mixed into the hot gas 3 after the heating space 2, when viewed in the flow direction s of the hot gas, such as in connection with an exhaust flow arrangement 5, that is connected to the heating space 2. To achieve the above the apparatus includes first mixing means 6a, that are arranged for adjustment of the final temperature T of the generated hot gas to mix into the same vaporized medium 4a, such as water vapour or like, that has been vaporized from the liquid space 1, that is at least partially in connection with the hot gas 3, such as surrounding the heating space 2 and/or the exhaust flow arrangement 5.

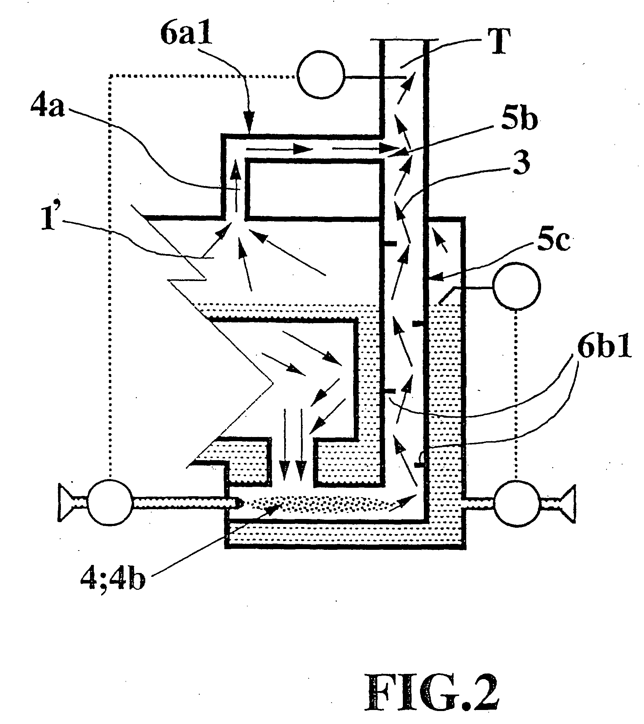

In fig. 1 there has been presented a very advantageous construction of the apparatus according to the invention in principle, in which the actual combustion gas duct 5c of the exhaust flow arrangement is led by a separate duct in relation to the fire tube 2 structure, into which vapour 4a, being generated from the water space 1, that is in connection with the fire tube 2, is led by a separate flow duct 6a1, also. The solution presented in fig. 2 differs from the above only in that respect, that also a rising part 5e of the actual combustion gas duct is placed within the same water space 1 than the fire tube 2. Furthermore the solution being represented in fig. 3 differs from the above in that respect, that the mixing point 5b is placed therewith built-in inside the same casing V, also.

It is common to all those solutions being represented in figs. 1 - 3, that e.g. water 4b is arranged to be mixed into the generated hot combustion gas 3, that has been generated advantageously e.g. in a furnace, by means of secondary mixing means 6b in a mixing space 5a, that is placed advantageously at the beginning of the combustion gas duct 5, to adjust the final temperature T of the generated hot combustion gas 3 advantageously by the principle shown in fig. 1 by means of a data processing unit 7, such as by a microprocessor or like, by adjusting the amount of the water 4b to be fed by means of a valve arrangement 8 and a temperature detector 9 observing the temperature of the combustion gas 3. In this case the final temperature T of the combustion gas 3 is arranged to be adjusted since the vaporization from the liquid space 1 has started by leading water vapour 4a to the exhaust flow arrangement 5 by means of first mixing means 6a. This is carried out advantageously in a way, that the amount of water 4b fed by the second mixing means 6b is restricted by means of the data processing unit 7, the adjusting means 8 and the measuring means 9 according to the principle above continuously within the entire desired temperature range.

Furthermore as an advantageous embodiment of the solutions being represented above the first mixing means 6a are arranged to connect the flow space 6a1 leading water vapour 4a and the flow space 5c leading combustion gas 3 at a mixing point 5b placed essentially above the water surface np of the water space 1.

Furthermore as an advantageous embodiment, mixing of the water vapour 4a to the combustion gas 3 passing through the flow space 5c, is made more efficient by choking the flow space 6a1 leading the same and/or the flow space 5c leading combustion gas 3. According to the solution represented particularly in fig. 3, mixing of the water vapour 4a is made more efficient by choking both the flow space 6a1 leading the same and the flow space 5c leading combustion gas 3 essentially at the mixing point 5b connecting the above particularly to achieve a so called ejector effect, that makes mixing of the water vapour furthermore much more efficient. In this way it has been confirmed, that combustion gas and water 4b fed into the same by spraying are mixed up very efficiently before feeding of the water vapour 4a generated in the water space 1 to the combustion gas. This has a crucial meaning particularly from the point of view of accuracy of the controlling process.

The type of solutions presented above operate in principle in a way, that generating of hot gas 3 may start at a phase, when the fluid surface np of the water reservoir 1 is above the fire tube 2. When the burner apparatus (that has not been presented) starts, the hot dry combustion gas 3 flows to the exhaust opening A of the fire tube 2. Water 4b to be sprayed is being led simultaneously to the control valve 8 and furthermore to the spraying nozzle, which causes a water fog to the exhaust pipe 5a, in which the hot combustion gases 3 being mixed up with the water fog warm up the water fog to hot gas, to e.g. about 500°C. The combustion gas being mixed up with water flows to the rising exhaust pipe 5c, that is equipped advantageously as presented above with turbulence means 6b1, which furthermore make mixing of the water gas to the combustion gases more efficient. The temperature detector organ 9 guids the control valve 8 by means of the automation 7 in a way, that the final temperature of hot gas remains at its set value in the exhaust flow pipe.

When the water level np of the water reservoir 1 reaches the vaporization temperature corresponding the pressure, the steam space 1' above the water space 1 starts to get filled with water vapour 4a. When the steam pressure gets higher than the pressure of the hot gas 3 in the exhaust pipe 5c, the water vapour 4a starts to flow from the steam pipe 6a1 to the exhaust pipe of hot gas (e.g. figs 1 and 2). If the final temperature of hot gas is e.g. 500°C, the water vapour 4a decreases the final temperature of hot gas, in which case the temperature detector organ 9 guids the control valve 8 of water to be sprayed by means of the automation 7 in a way, that the amount of spray water 4b led to the nozzle decreases, until the final temperature T of hot gas 3 is at its set value. In this connection dimensioning of the heat transmitting surfaces of the fire tube 2 or the like are being carried out in a way, that spraying of water 4b to the exhaust pipe 5a may be carried out continuously.

When the water level np decreases, when the water vapour 4a exhaust to the steam pipe 6a1 or directly to the exhaust flow pipe (fig. 3), the control detector organ 10 of the water level guids the filling valve 11 in a way, that filling water flows to the water reservoir 1 and water level np reaches the set height of the control surface. If the water level np decreases below a so called dry running limit, the automation 7 stops the burner apparatus. The water reservoir 1 is equipped with safety devices protecting the same from over-pressures when necessary, by means e.g. safety valves or other corresponding auxiliary devices. The adjustment of the combustion air of the burner may be equipped with a safety valve, also, the opening pressure of which is being adjusted above the maximum operating pressure of the process. These safety valves have not been presented in greater detail in the presented directional drawings.

It is possible to carry out the apparatus according to the invention also in a way, that the water space is in connection with the combustion gas duct only. An advantage of the fire tube solution, that is surrounded by a water space, that in this way it is possible to use very usual manufacturing materials due to low surface temperatures. Furthermore it is clear, that the heating space needs not to be a furnace, but other kind of heat generation may be applied also, e.g. electric resistors etc. Also e.g. some heat generating process may act as the heating space.

## Claims

1. Method for generating hot gas, whereby hot gas (3), such as combustion gas is being generated by means of a heating space (2), such as a furnace or like exploiting particularly combustion and being in connection with a liquid space (1), whereby to the hot gas first of all a medium (4b) in liquid form, such as water or like, is being mixed by means of secondary mixing means (6b) preferably after the heating space (2) when viewed in the flow direction (s) of the hot gas, such as in a mixing space (5a), that is in connection with an exhaust flow arrangement (5) being connected to the heating space (2), at least to adjust the final temperature (T) of the generated hot gas (3) by means of a data processing unit (7), such as by a microprocessor or like, by adjusting the amount of the medium (4b) to be fed in liquid form by means of adjusting means (8), such as by a valve arrangement or like, and by measuring means (9) observing the state of the hot gas (3), such as by temperature detectors or like, the final temperature (T) of the generated hot gas (3) being adjusted since the vaporization from the liquid space (1) surrounding the heating space (2) and/or the exhaust flow arrangement (5) has started by leading vaporized medium (4a), such as water vapour or like, to the exhaust flow arrangement (5) by means of first mixing means (6a) at a mixing point (5b) placed above the liquid surface (np) of the liquid space (1), and by adjusting the amount of said medium (4b).

2. Method according to claim 1, **characterized** in, that mixing of the vaporized medium (4a) to the hot gas (3) passing through a flow space (5c), such as through one or several pipes, ducts or like of the exhaust flow arrangement (5), is being made more efficient by choking the flow space (6a1) leading the same and/or the flow space (5c) leading hot gas (3), preferably essentially in connection with the mixing point (5b) connecting the same.

3. Method according to claim 1 or 2, **characterized** in, that mixing of the vaporized medium (4a) to the hot gas (3) passing through a flow space (5c), such as through one or several pipes, ducts or like of the exhaust flow arrangement (5), is being made more efficient by means of turbulence means (6b1), that are placed at least before the mixing point (5b) in the flow space (5c) leading hot gas (3).

4. Apparatus for generating hot gas, that includes a heating space (2), such as a furnace or like exploiting particularly combustion and being in connection with a liquid space (1), wherein first of all a medium (4b) in liquid form, such as water or like, is arranged to be mixed to the hot gas being generated therewith by means of secondary mixing means (6b) preferably after the heating space (2) when viewed in the flow direction (s) of the hot gas such as in a mixing space (5a), that is in connection with an exhaust flow arrangement (5) being connected to the heating space (2), at least to adjust the final temperature (T) of the generated hot gas (3) by means of a data processing unit (7), such as by a microprocessor or like, by adjusting the amount of the medium (4b) to be fed in liquid form by means of adjusting means (8), such as by valve arrangement or like, and by measuring means (9) observing the state of the hot gas (3), such as by temperature detectors or like, the final temperature (T) of the. generated hot gas (3) being arranged to be adjusted since the vaporization from the liquid space (1) surrounding the heating space (2) and/or the exhaust flow arrangement (5) has started by leading vaporized medium (4a), such as water vapour or like, to the exhaust flow arrangement (5) by means of first mixing means (6a) and by adjusting the amount of said medium (4b).

5. Apparatus according to claim 4, **characterized** in, that the first mixing means (6a) are arranged to connect the flow space (6a1) leading the vaporized medium (4a) and the flow space (5c) of the exhaust flow arrangement leading the generated hot gas at a mixing point (5b) placed essentially above the liquid surface (np) of the liquid space (1).

6. Apparatus according to claim 4 or 5, **characterized** in, that mixing of the vaporized medium (4a) to the hot gas (3) passing through a flow space (5c), such as through,one or several pipes, ducts or like of the exhaust flow arrangement (5), has been made more efficient by choking the flow space (6al) leading the same and/or the flow space (5c) leading hot gas (3).

7. Apparatus according to-claim 6, **characterized** in, that mixing of the vaporized medium (4a) to the hot gas (3), has been made more efficient by choking the flow space (6al) leading the same and the flow space (5c) leading hot gas (3) essentially in connection with the mixing point (5b) connecting the same particularly to achieve a so called ejector effect.

8. Apparatus according to any of the claims 4 - 7 above, **characterized** in, that mixing of the vaporized medium (4a) to the hot gas (3) passing through a flow space (5c), such as through one or several pipes, ducts or like of the exhaust flow arrangement (5), has been made more efficient by means of turbulence means (6b1), that are placed at least before the mixing point (5b) in the flow space (5c) leading hot gas (3).

## Patentansprüche

1. Verfahren zur Erzeugung eines heißen Gases, wobei mit Hilfe eines in Verbindung mit einem Flüssigkeitsraum (1) stehenden Erhitzungsraums (2), wie z.B. einer Feuerstelle oder ähnlichem, der besonders Verbrennung nutzt, ein heißes Gas (3) erzeugt wird, wie z.B. Rauchgas, wobei mit dem heißen Gas zunächst ein Medium in flüssiger Form (4b), wie z.B. Wasser oder ähnliches, mit Hilfe sekundärer Mischelemente (6b) vorzugsweise nach dem Erhitzungsraum (2) in Strömungsrichtung (s) des heißen Gases gesehen, wie z.B. in einem Mischraum (5a), der in Verbindung mit einer mit dem Erhitzungsraum (2) verbundenen Abflussanordnung (5) steht, vermischt wird, zumindest um die Endtemperatur (T) des erzeugten heißen Gases (3) mit Hilfe einer Datenverarbeitungseinheit (7), wie z.B. einem Mikroprozessor oder ähnlichem, zu regeln, indem die Menge des in flüssiger Form einzuspeisenden Mediums (4b) mit Hilfe von Reglerelementen (8), wie z.B. einer Ventilanordnung oder ähnlichem, und mit Hilfe von Messelementen (9), die den Zustand des heißen Gases (3) überwachen, wie z.B. Temperaturfühler oder ähnlichen, geregelt wird, wobei die Endtemperatur (T) des erzeugten heißen Gases (3) geregelt wird, nachdem das Verdampfen aus dem Flüssigkeitsraum (1), der den Erhitzungsraum (2) und/oder die Abflussanordnung (5) umgibt, eingesetzt hat, indem das verdampfte Medium (4a), wie z.B. Wasserdampf oder ähnliches, mit Hilfe der ersten Mischelemente (6a) an einem über der Flüssigkeitsoberfläche (np) des Flüssigkeitsraums (1) liegenden Mischpunkt (5b) zur Abflussanordnung (5) geleitet wird und indem die Menge des besagten Mediums (4b) geregelt wird.

2. Verfahren nach Patentanspruch 1, dadurch **gekennzeichnet**, dass die Mischung des verdampften Mediums (4a) mit dem heißen Gas (3), das durch einen Strömungsraum (5c), wie z.B. durch einen oder mehrere Rohre, Kanäle oder ähnliche der Abflussanordnung (5), fließt, effektiver gestaltet wird, indem der Strömungsraum (6a1), der das Medium leitet, und/oder der Strömungsraum (5c), der das heiße Gas (3) leitet, vorzugsweise im Wesentlichen im Zusammenhang mit dem Mischpunkt (5b), der die besagten verbindet, eingeengt wird.

3. Verfahren nach Patentanspruch 1 oder 2, dadurch **gekennzeichnet**, dass die Mischung des verdampften Mediums (4a) mit dem heißen Gas (3), das durch einen Strömungsraum (5c), wie z.B. durch ein oder mehrere Rohre, Kanäle oder ähnliche der Abflussanordnung (5), fließt, durch Turbulenzmittel (6b1), die zumindest vor dem Mischpunkt (5b) im Strömungsraum (5c), der heißes Gas (3) leitet, platziert werden, effektiver gestaltet wird.

4. Gerät zur Erzeugung eines heißen Gases, das einen Erhitzungsraum (2), wie z.B. eine Feuerstelle oder ähnliches, der besonders Verbrennung nutzt, enthält und in Verbindung mit einem Flüssigkeitsraum (1) steht, worin mit dem hiermit erzeugten heißen Gas zunächst ein Medium in flüssiger Form (4b), wie z.B. Wasser oder ähnliches, mit Hilfe sekundärer Mischelemente (6b) vorzugsweise nach dem Erhitzungsraum (2) in Strömungsrichtung (s) des heißen Gases gesehen, wie z.B. in einem Mischraum (5a), der in Verbindung mit einer mit dem Erhitzungsraum (2) verbundenen Abflussanordnung (5) steht, vermischt wird, zumindest um die Endtemperatur (T) des erzeugten heißen Gases (3) mit Hilfe einer Datenverarbeitungseinheit (7), wie z.B. einem Mikroprozessor oder ähnlichem, zu regeln, indem die Menge des in flüssiger Form einzuspeisenden Mediums (4b) mit Hilfe von Reglerelementen (8), wie z.B. einer Ventilanordnung oder ähnlichem, und mit Hilfe von Messelementen (9), die den Zustand des heißen Gases (3) überwachen, wie z.B. Temperaturfühler oder ähnlichen, geregelt wird, wobei die Endtemperatur (T) des erzeugten heißen Gases (3) geregelt wird, nachdem das Verdampfen aus dem Flüssigkeitsraum (1), der den Erhitzungsraum (2) und/oder die Abflussanordnung (5) umgibt, eingesetzt hat, indem das verdampfte Medium (4a), wie z.B. Wasserdampf oder ähnliches, mit Hilfe der ersten Mischelemente (6a) zur Abflussanordnung (5) geleitet wird und indem die Menge des besagten Mediums (4b) geregelt wird.

5. Gerät nach Patentanspruch 4, dadurch **gekennzeichnet**, dass die ersten Mischelemente (6a) den das verdampfte Medium (4a) leitenden Strömungsraum (6c1) und den das heiße Gas (3) leitenden Strömungsraum (5c) der Abflussanordnung in einem Mischpunkt (5b) oberhalb der Flüssigkeitsoberfläche (np) des Flüssigkeitsraums (1) verbinden.

6. Gerät nach Patentanspruch 4 oder 5, dadurch **gekennzeichnet**, dass die Mischung des verdampften Mediums (4a) mit dem heißen Gas (3), das durch einen Strömungsraum (5c), wie z.B. durch ein oder mehrere Rohre, Kanäle oder ähnliche der Abflussanordnung (5) fließt, effektiver gestaltet wird, indem der Strömungsraum (6a1), der das Medium leitet, und/oder der Strömungsraum (5c), der das heiße Gas (3) leitet, eingeengt wird.

7. Gerät nach Patentanspruch 6, dadurch **gekennzeichnet**, dass die Mischung des verdampften Mediums (4a) mit dem heißen Gas (3) effektiver gestaltet wird, indem der Strömungsraum (6a1), der das Medium leitet, und/oder der Strömungsraum (5c), der das heiße Gas (3) leitet, im Wesentlichen im Zusammenhang mit dem Mischpunkt (5b), der die besagten verbindet, eingeengt wird, insbesondere um einen sogenannten Ejektoreffekt zu erzielen.

8. Gerät nach einem der oben genannten Patentansprüche 4-7, dadurch **gekennzeichnet**, dass die Mischung des verdampften Mediums (4a) mit dem heißen Gas (3), das durch einen Strömungsraum (5c), wie z.B. durch ein oder mehrere Rohre, Kanäle oder ähnliche der Abflussanordnung (5), fließt, durch Turbulenzmittel (6b1), die zumindest vor dem Mischpunkt (5b) im Strömungsraum (5c), der heißes Gas (3) leitet, platziert werden, effektiver gestaltet wird.

## Revendications

1. Méthode de production de gaz chauds selon laquelle les gaz chauds (3), comme des gaz de combustion, sont produits à l'aide d'un espace de chauffage (2), tel qu'un four ou équivalent, exploitant en particulier la combustion et en liaison avec un espace de liquide (1) où, pour les gaz chauds, un milieu (4b) sous forme liquide, comme de l'eau ou équivalent, est tout d'abord mélangé par des moyens de mélange secondaire (6b) de préférence après l'espace de chauffage (2), lorsqu'on regarde dans le sens du flux (s) des gaz chauds, comme dans un espace de mélange (5a) relié à un arrangement de flux d'échappement (5) en liaison avec l'espace de chauffage (2), au moins pour régler la température finale (T) des ga'z chauds produits (3) à l'aide d'un module de traitement des données (7) comme un microprocesseur ou équivalent, en réglant la quantité du milieu (4b) à envoyer sous forme liquide à l'aide d'un moyen de réglage (8), comme un arrangement de vanne ou équivalent, et par une méthode de mesure (9) qui observe l'état des gaz chauds (3), comme des sondes de température ou équivalent, la température finale (T) des gaz chauds produits (3) étant réglée du fait que la vaporisation de l'espace de liquide (1) entourant l'espace de chauffage (2) et/ou l'arrangement de flux d'échappement (5) a démarré en amenant du milieu vaporisé (4a), comme de la vapeur d'eau ou équivalent, vers l'arrangement de flux d'échappement (5) par des dispositifs de mélange primaire (6a) en un point de mélange (5b) situé au-dessus de la surface du liquide (np) de l'espace de liquide (1) et en réglant la quantité dudit milieu (4b).

2. Méthode selon la revendication 1, **caractérisée** en ce que le mélange du milieu vaporisé (4a) vers les gaz chauds (3) traversant un espace de flux (5c), comme un ou plusieurs tuyaux, conduites ou équivalent de l'arrangement de flux d'échappement (5) est amélioré par l'étranglement de l'espace de flux (6a1) qui l'achemine et/ou l'espace de flux (5c) acheminant les gaz chauds (3), de préférence sensiblement en liaison avec le point de mélange (5b) qui le relie.

3. Méthode selon la revendication 1 ou 2, **caractérisée** en ce que le mélange du milieu vaporisé (4a) vers les gaz chauds (3) traversant un espace de flux (5c), comme un ou plusieurs tuyaux, conduites ou équivalent de l'arrangement de flux d'échappement (5) est amélioré par des moyens de turbulence (6b1) situés au moins avant le point de mélange (5b) dans l'espace de flux (5c) acheminant les gaz chauds (3).

4. Dispositif de production de gaz chauds comprenant un espace de chauffage (2) comme un four ou équivalent, exploitant en particulier la combustion et en liaison avec un espace de liquide (1) dans lequel un milieu (4b) sous forme liquide, comme de l'eau ou équivalent, est tout d'abord disposé de façon à ce qu'il soit mélangé avec les gaz chauds produits par des moyens de mélange secondaire (6b) de préférence après l'espace de chauffage (2), lorsqu'on regarde dans le sens du flux (s) des gaz chauds, comme dans un espace de mélange (5a) en communication avec un arrangement de flux d'échappement (5) relié à l'espace de chauffage (2), au moins pour régler la température finale (T) des gaz chauds produits (3) à l'aide d'un module de traitement des données (7) comme un microprocesseur ou équivalent, en réglant la quantité du milieu (4b) à envoyer sous forme liquide à l'aide d'un moyen de réglage (8), comme un arrangement de vanne ou équivalent, et par une méthode de mesure (9) qui observe l'état des gaz chauds (3), comme des sondes de température ou équivalent, la température finale (T) des gaz chauds produits (3) étant réglée du fait que la vaporisation de l'espace de liquide (1) entourant l'espace de chauffage (2) et/ou l'arrangement de flux d'échappement (5) a démarré en amenant du milieu vaporisé (4a), comme de la vapeur d'eau ou équivalent, vers l'arrangement de flux d'échappement (5) par des moyens de mélange primaire (6a) et en réglant la quantité dudit milieu (4b).

5. Dispositif selon la revendication 4, **caractérisé** en ce que les moyens de mélange primaire (6a) sont disposés de manière à relier l'espace de flux (6a1) acheminant le milieu vaporisé (4a) et l'espace de flux (5c) de l'arrangement de flux d'échappement acheminant les gaz chauds produits en un point de mélange (5b) situé sensiblement au-dessus de la surface du liquide (np) de l'espace de liquide (1).

6. Dispositif selon la revendication 4 ou 5, **caractérisé** en ce que le mélange du milieu vaporisé (4a) vers les gaz chauds (3) traversant un espace de flux (5c) comme un ou plusieurs tuyaux, conduites ou équivalent de l'arrangement de flux d'échappement (5) est amélioré par l'étranglement de l'espace de flux (6a1) qui l'achemine et/ou l'espace de flux (5c) acheminant les gaz chauds (3).

7. Dispositif selon la revendication 6, **caractérisé** en ce que le mélange du milieu vaporisé (4a) vers les gaz chauds (3) est amélioré par l'étranglement de l'espace de flux (6a1) acheminant les gaz chauds et l'espace de flux (5c) acheminant les gaz chauds sensiblement en liaison avec le point de mélange (5b) le reliant, en particulier pour obtenir ce qu'il est convenu d'appeler un effet d'éjecteur.

8. Dispositif selon quelconque des revendications 4 à 7 ci-dessus, **caractérisé** en ce que le mélange du milieu vaporisé (4a) vers les gaz chauds (3) traversant un espace de flux (5c), comme un ou plusieurs tuyaux, conduites ou équivalent de l'arrangment de flux d'échappement (5) a été amelioré par des moyens de turbulence (6b1) placés au moins avant le point de mélange (5b) dans l'espace de flux (5c) acheminant les gaz chauds.
